# EUROPEAN PATENT APPLICATION

(11) **EP 4 825 595 A1**
(43) Date of publication of application: **21.10.2026**
(21) Application number: 25170662.8
(22) Date of filing: 15.04.2025
(51) Int. Cl.: B41J 2/21, B41J 3/407, B41M 3/00, H04N 1/54

(54) **METHOD FOR PRINTING AN IMAGE ON A BACK SIDE OF AN ELEVATED PRINT AND A PRINTER THEREFOR**

(71) Applicant: Canon Production Printing Holding B.V., 5914 HH Venlo (NL)
(72) Inventor: WIJKAMP, Clemens T., 5914 HH Venlo (NL)
(74) Representative: Canon Production Printing IP Department

(57) **Abstract**

The invention relates to a method for printing an image on a back side of an elevated print by means of a printer (5) for elevated print production, the method comprises the steps receiving a first two-dimensional image (22) with information intended to be printed as a backside of the elevated print, receiving a second two-dimensional image (21) and corresponding height map intended to be printed as the elevated print, creating a single print job comprising a first plurality of layers of ink in order to form the first two-dimensional image, an optional second plurality of layers of white ink and a third plurality of layers of ink in order to form the elevated print from the second two-dimensional image and the height map, and automatically printing the single print job.

## Description

### FIELD OF THE INVENTION

The invention relates to a method for printing an image on a back side of an elevated print by means of a printer for elevated print production. Hereinafter the printer may also be called a printing system.

### BACKGROUND OF THE INVENTION

Elevated printing can be performed by ejecting multiple layers of ink on top of each other. A height map provided by the print controller controls for every pixel position in the XY plane a desired height at said pixel position. Usually the desired height can be achieved by structure ink, but also coloured ink, white ink or transparent ink may be used to create an elevation of the elevated print. In the elevated print the elevation may be built up with all kind of inks that are available in the printer. The backside of the elevated shows then the colours of the ink(s) used for the elevation. When printing on an opaque media like di-bond or paper this is no problem.

However, when printing on a transparent media or when printing an "ink only" print, i.e. the print medium is removed after printing, the backside of the elevated print will have the colour of the elevation build up. This colour depends on the used inks.

It is an object of the invention to provide a method wherein the appearance of the backside of the elevated print is improved.

### SUMMARY OF THE INVENTION

According to the present invention this object is achieved by providing a method according to claim 1. A first two-dimensional image is received with information intended to be printed as a backside of the elevated print, and a second two-dimensional image and corresponding height map is received intended to be printed as the elevated print. A single print job is created which comprises a first plurality of layers of ink in order to form the first two-dimensional image, a second plurality of layers of white ink and a third plurality of layers of ink in order to form the elevated print from the second two-dimensional image and the height map. The created single print job is automatically printed. Thereto the first plurality of layers of ink on a removable or transparent print medium is printed, the second plurality of layers of white ink on top of the first plurality of printed layers of ink is printed, and finally the third plurality of layers is printed on top of the second plurality of printed layers of white ink.

In many occasions an image on the backside is nicer than no image at all. According to the present invention it is now possible to add information on the backside of the elevated print which may be useful. The information may be part of the first two-dimensional image.

To create an image on the backside of the elevated print printed on transparent or removable media first a (2D) colour image is printed. On top of this colour image optionally a white cover layer is printed. On top op this optional white cover layer the final elevated print is made.

The back side is designed together with the elevated print. The present invention offers the option to create a printable (2D) backside and elevated frontside from the same design. The needed layer build up (backside) colour - (backside) white cover - elevated print are printed automatically. The backside is designed together with the elevated print which reduces the change on mistakes and errors. The (2D) backside and elevated print are exported together from the print controller to the printer which prevents errors and increases productivity.

Backside and elevated print are printed together in one single print job. This prevents errors and increased productivity.

According to an embodiment the method comprises the step of mirroring the first two-dimensional image before creating the single print job. By mirroring the first two-dimensional image, the image, when printed and looked at from the backside of the elevated print, is equal to the original first two-dimensional image, i.e. for example, when shown in a preview of the original first two-dimensional image on a user interface of the printer.

According to an embodiment the step of printing the third plurality of layers comprises the sub-steps of printing a first amount of pixels of the third plurality of layers with a structure ink, a white ink, a transparent ink, a coloured ink or a combination of inks for forming an elevation of the elevation print according to the height map, a second amount of pixels of the third plurality of layers to form a white cover layer of the elevation, and a third amount of pixels of the third plurality of layers with a coloured ink for forming the second two-dimensional image.

According to an embodiment the combination of inks comprises at least two inks out of a structure ink, a white ink, a colour ink and a transparent ink.

According to an embodiment the method comprises the steps of printing the first amount of pixels of the third plurality of layers with white ink, transparent ink, or a combination of white ink and transparent ink and omitting the second plurality of layers of white ink.

The present invention also relates to a printer for elevated print production, the printer comprising a print controller for receiving images to be printed, for creating print jobs and for controlling the print process, a print head for ejecting ink on a print medium, wherein the print controller is configured to perform the steps of the method according to the present invention. The printer may be a flatbed printer.

According to an embodiment the printer comprises ink containers with coloured ink, white ink, structure ink and optionally transparent ink, and the print controller is configured to execute the steps of the method according to the present invention.

The present invention also relates to a non-transitory recording medium comprising computer executable program code configured to instruct a printer according to the present invention.

Further scope of applicability of the present invention will become apparent from the detailed description given hereinafter. However, it should be understood that the detailed description and specific examples, while indicating preferred embodiments of the invention, are given by way of illustration only, since various changes and modifications within the scope of the invention will become apparent to those skilled in the art from this detailed description.

### BRIEF DESCRIPTION OF THE DRAWINGS

Hereinafter the present invention is further elucidated with references to the appended drawings showing non-limiting embodiments and wherein:
- Fig. 1: shows a printing system according to the present invention;
- Fig. 2: shows an example of the first two-dimensional image and second two-dimensional image according ot the present invention;
- Fig. 3: is a side view of a built up of the elevated printed according to the prior art;
- Fig. 4: is a side view of a built up of the elevated printed according to the present invention;
- Fig. 5: is a flowchart of an embodiment of the method according to the present invention; and
- Fig. 6: is a schematic diagram of a non-transitory recording medium according to the present invention.

### DETAILED DESCRIPTION OF EMBODIMENTS

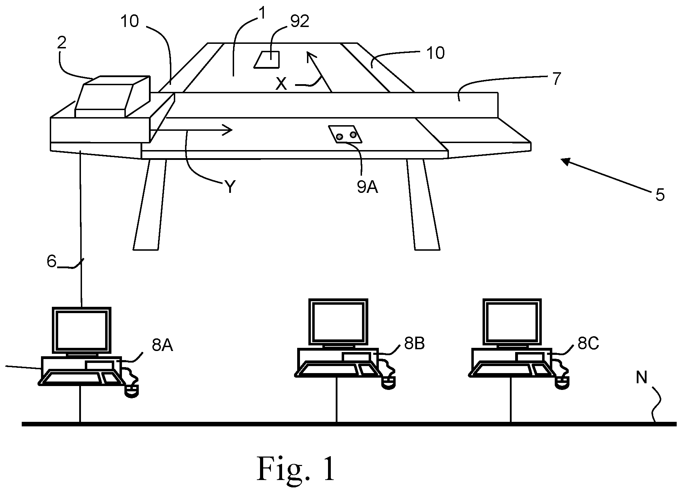

Fig. 1 shows a printing system 5 according to the present invention. The printing system 5 comprises a number of workstations 8B, 8C, which may be personal computers or other devices for preparing image data for elevated and ordinary two-dimensional prints to be printed. These workstations have access to a network N for transferring print jobs comprising the image data to a print controller 8A that is configured to receive the print jobs for prints and derive pass images. The print controller 8A may be part of the printing system 5 connected to a print controller of the print system 5 via a connection 6. The printing system 5 further comprises a print head 2 attached to an armature 7 for applying colorants, for example cyan ink (C), magenta ink (M), yellow ink (Y), black ink (K), white ink (W), transparent ink also known as varnish, and structure ink to a flat media piece 9A placed on a flatbed area 1 in order to obtain an elevated print. The armature 7 may be a gantry above the flatbed area 1 as shown in Fig. 1 or a robot arm (not shown) moving in a plurality of directions over the flatbed area 1. The flatbed area 1 is the surface of the flatbed which is at least partially printable by the print head 2. The pieces of media may be so small that they are completely placed on the flatbed area 1, but a piece of media which is larger than the flatbed area, in which case an image which is going to cover the whole piece of media must be printed into a plurality of parts of the image, is not excluded. A first piece 9A has already been printed upon, while another piece 92 is not provided with any recording material yet. The print head 2 reciprocally scans the flatbed area 1 in the second direction Y along a gantry 7 perpendicular to a first direction X of the gantry 7 over the flatbed area 1 along guiding parts 10. During printing of an image on the piece 9A of media the piece 92, 9A of media is not moved on the flatbed area 1. This way of working is advantageous for rigid print media. A print head which is as wide as the flatbed area may also be envisaged within the scope of the invention. Such a print head may be moveable in at least one direction over the flatbed area 1. The piece of media 9A may have a thickness of 10 mm, while the piece of media 92 may have a thickness of 20 mm.

The flat bed surface 1 is provided with through-holes to allow air to pass through the flat bed surface 1. A pressure chamber (not shown) is provided below flat bed surface 1 as part of a suction chamber assembly. By applying a negative pressure in the pressure chamber, print media can be securely and flatly held against the flat bed surface 1.

In order to allow the printing of an elevated print by printing layers of ink on top of each other to a certain substantial height of a plurality of mm., the print head 2 is adjustable in height in a direction perpendicular to the flat bed surface 1.

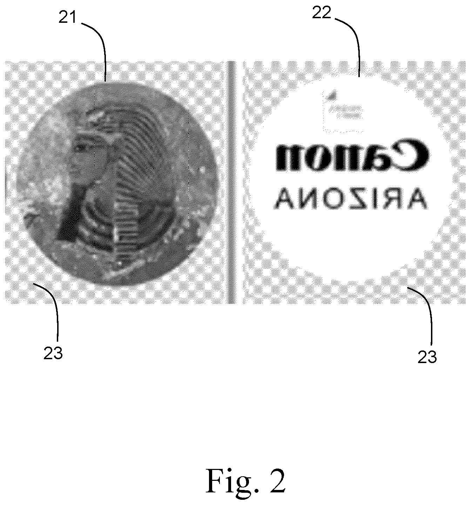

Fig. 2 shows an example of the first two-dimensional image and second two-dimensional image according ot the present invention; The first two-dimensional image 22 shows an image with the Canon trade mark intended to be printed on the backside of the elevated print. The second two-dimensional image 21 shows an image of a pharaoh intended to be printed in an elevated way. The two-dimensional image 21 is provided together with a height map. The background 23 comprises a raster for convenience reasons but the raster 23 will not be printed. The transparent or removable print medium on which the first and second two-dimensional images will be printed may be circular or may be of another shape which will be cut into a circular piece as indicated by the raster 23. Fig. 2 may be part of a user interface of a printer. The user interface may be configured and suitable for a preview of the elevated print to be made with the first two-dimensional image 22 on the backside of the elevated print of the second two-dimensional image 21.

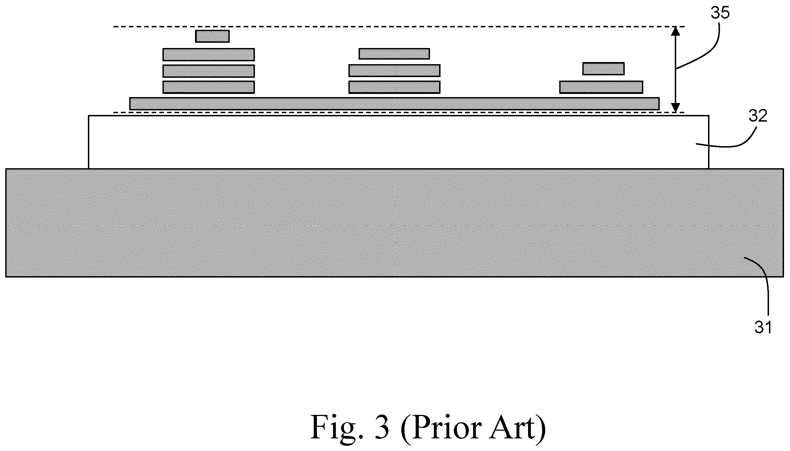

Fig. 3 is a side view of an example of a built up of the elevated printed according to the prior art. A print medium 32 - transparent or removable - is provided on the flatbed table 31 of the printer. A plurality of layers 35 is deposited on the print medium 32 which results in an elevation. The plurality of layers 35 comprises a first amount of pixels to be printed with a structure ink, a white ink, a transparent ink, a coloured ink or a combination of inks for forming an elevation of the elevation print according to the height map, a second amount of pixels to be printed with a white ink to form a white cover layer of the elevation, and a third amount of pixels to be printed with a coloured ink for forming the second two-dimensional image. For convenience reasons the first amount, the second amount and the third amount of pixels is not shown in detail in Fig. 3. However, the print process for printing the elevated print 35 is according to the method described in US patent application 9387666 which is hereby included by reference.

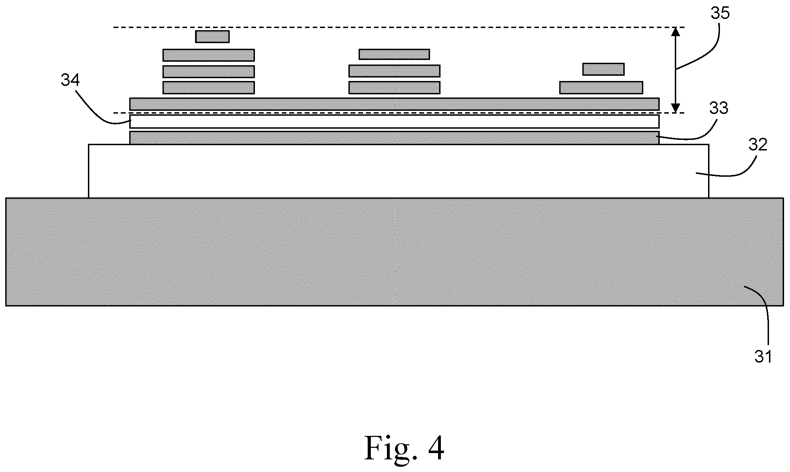

Fig. 4 is a side view of an example of a built up of the elevated printed according to the present invention. A print medium 32 - transparent or removable - is provided on the flatbed table 31 of the printer. On the print medium 32 the first plurality of layers 33 of ink are printed which constitutes the first two-dimensional image. The optional second plurality of layers 34 of white ink is printed on top of the first plurality of printed layers 33 of ink. The third plurality of layers 35 which results in an elevation is printed on top of the second plurality of printed layers 34 of white ink. The third plurality of layers 35 in Fig. 4 is similar to the plurality of layers 35 in Fig. 3. The second plurality of layers of white ink is needed to keep the correct colour(s) of the first plurality of layers if the elevation part of the third plurality of layers is built up with for example all inks (resulting in a black colour) or for example with structure ink having a yellow/brown colour. However, if the second plurality of layers of white ink is not needed when the elevation part of the third plurality of layers is built up with white ink, transparent ink or a combination of a white ink and a transparent ink.

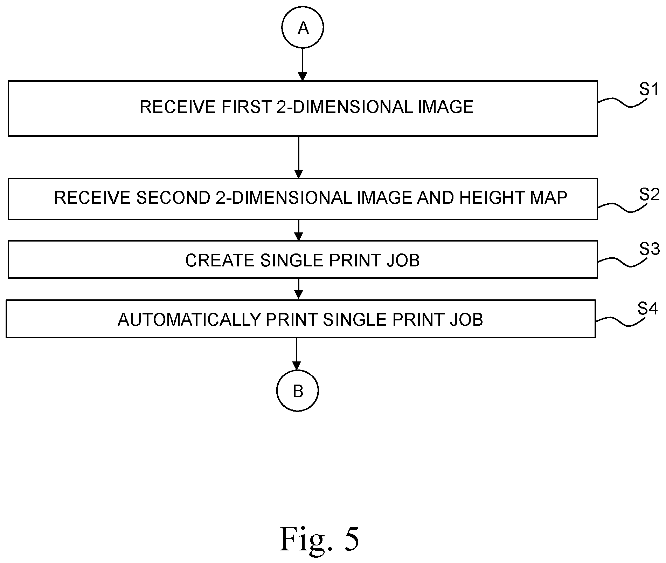

Fig. 5 is a flowchart of an embodiment of the method according to the present invention. Starting point of the method is point A. Point A leads to a first step S1.

In the first step S1 the print controller of the flatbed printer receives a first two-dimensional image with information intended to be printed as a backside of the elevated print.

In a second step S2 the print controller receives a second two-dimensional image and corresponding height map intended to be printed as the elevated print.

In a third step S3 the print controller creates a single print job comprising a first plurality of layers of ink in order to form the first two-dimensional image, an optional second plurality of layers of white ink and a third plurality of layers of ink in order to form the elevated print from the second two-dimensional image and the height map. The optional second plurality of layers of white ink may be needed to keep the correct colour(s) of the first plurality of layers of ink. However, when the elevation is built up with white ink, the second plurality of layers can be omitted. Therefore in case the elevation part of the third plurality of layers is printed with white ink, transparent ink or a combination of white and transparent ink a thickness of the second plurality of layers may be set to zero or the second plurality of layers may be left out.

In a fourth step S4 the printer is automatically printing the single print job. The fourth step S4 comprises the sub-steps of printing the first plurality of layers of ink on a removable or transparent print medium, printing the second plurality of layers of white ink on top of the first plurality of printed layers of ink, and printing the third plurality of layers on top of the second plurality of printed layers of white ink, as shown in Fig. 4.

The method ends in an end point B.

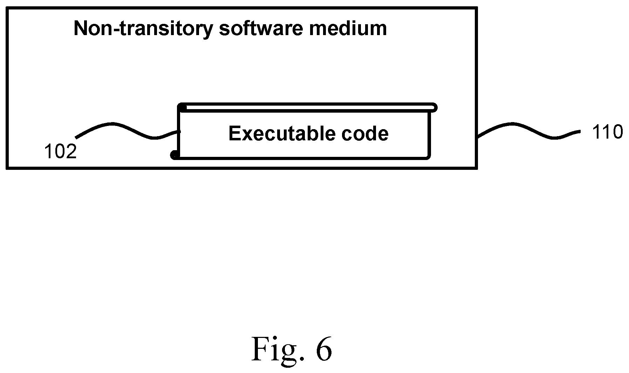

Fig. 6 schematically shows a non-transitory software medium 110 according to the invention. The software medium 110 comprises executable code 102 configured to, when executed, perform the method according to the invention, e.g. as described with respect to either the printer shown in Fig. 1 or the method shown in Fig. 5 and/or according to any of the variants and modifications of the printer and/or of the method described hereinbefore.

The non-transitory software medium 110 may, specifically, be formed as a CD or a CD-ROM, a DVD or a DVD-ROM, a Blu Ray disc or a Blu Ray-ROM disc, a magnetic hard drive, a solid state disk (SSD) hard drive, a USB memory device and so on.

The above disclosure is intended as merely exemplary, and not to limit the scope of the invention, which is to be determined by reference to the following claims.

## Claims

1. A method for printing an image on a back side of an elevated print by means of a printer for elevated print production, the method comprises the steps
a) receiving a first two-dimensional image with information intended to be printed as a backside of the elevated print,
b) receiving a second two-dimensional image and corresponding height map intended to be printed as the elevated print,
c) creating a single print job comprising a first plurality of layers of ink in order to form the first two-dimensional image, an optional second plurality of layers of white ink and a third plurality of layers of ink in order to form the elevated print from the second two-dimensional image and the height map, and
d) automatically printing the single print job by
d1) printing the first plurality of layers of ink on a removable or transparent print medium,
d2) printing the optional second plurality of layers of white ink on top of the first plurality of printed layers of ink, and
d3) printing the third plurality of layers on top of the second plurality of printed layers of white ink.

2. A method according to claim 1, wherein the method comprises the step of mirroring the first two-dimensional image before creating the single print job.

3. A method according to claim 1 or 2, wherein the step of printing the third plurality of layers comprises the sub-steps of printing a first amount of pixels of the third plurality of layers with a structure ink, a white ink, a transparent ink, a coloured ink or a combination of inks for forming an elevation of the elevation print according to the height map, a second amount of pixels of the third plurality of layers to form a white cover layer of the elevation, and a third amount of pixels of the third plurality of layers with a coloured ink for forming the second two-dimensional image.

4. A method according to claim 3, wherein the combination of inks comprises at least two inks out of a structure ink, a white ink, a colour ink and a transparent ink.

5. Method according to claim 3, wherein the method comprises the steps of printing the first amount of pixels of the third plurality of layers with white ink, transparent ink, or a combination of white ink and transparent ink and omitting the second plurality of layers of white ink.

6. Printer for elevated print production, the printer comprising a print controller for receiving images to be printed, for creating print jobs and for controlling the print process, a print head for ejecting ink on a print medium, wherein the print controller is configured to perform the steps of the method according to claim 1 or 2.

7. Printer according to claim 6, wherein the printer comprises ink containers with coloured ink, white ink, structure ink and optionally transparent ink, and the print controller is configured to execute the steps of the method according to any of the claims 3 - 5.

8. Non-transitory recording medium comprising computer executable program code configured to instruct a printer according to claim 6 to perform the method according to claim 1 or 2.

9. Non-transitory recording medium comprising computer executable program code configured to instruct a printer according to claim 7 to perform the method according to any of the claims 3 - 5.
